# EUROPEAN PATENT APPLICATION

(11) **EP 1 767 104 A2**
(43) Date of publication of application: **28.03.2007**
(21) Application number: 06075317.5
(22) Date of filing: 08.02.2006
(51) Int. Cl.: A23N 1/02, C11B 1/06

(54) **Plant for the extraction of the liquid component from drupes mounted on a surface**

(30) Priority: 27.09.2005 IT RE20050107
(71) Applicant: Ing. Bonfiglioli S.p.A., 40050 Castello d'Argile (Bologna) (IT)
(72) Inventor: Bonfiglioli, Giancarlo, Ing. Bonfiglioli S.p.a., 40050 Castello D'Argile (Bologna) (IT)
(74) Representative: Corradini, Corrado

(57) **Abstract**

A plant (1) for the extraction of the liquid component from drupes mounted on a surface (100) equipped with an axle provided with wheels (120), said plant (1) comprising a cylinder oil mill (4) suitable for crushing the drupes to obtain a paste from it; at least one muller (5) for the homogenisation of said paste; a decanter (6) for the extraction of the must from the homogenised paste; a centrifugal separator (7) for the extraction of the liquid component from the must, where said plant (1) comprises mechanical motion transmission means connected to a transmission shaft (15) that extends longitudinally on the surface (100) and is connected to the rear power take off of the tractor, said shaft (15) being connected through a speed reducer (60) to the shaft of said at least one muller (5), and through a speed multiplier (70) to the rotating elements of the cylinder oil mill (4), of the decanter (6), of the centrifugal separator (7), and of a generator set (16).

## Description

The present invention refers to a plant for the extraction of the liquid component from drupes, in particular oil from olives, entirely housed on a trailer that hooks onto a farming tractor.

Plants, known as oil mills, for producing olive oil through their milling are known.

Nowadays, the production of oil from olives is carried out with continuous plants, in which the olives are firstly defoliated and then washed in a washer from which they arrive at the cylinder oil mill that crush the washed olives to obtain a paste. Then the paste is pushed to a muller consisting of a homogenisation tank provided with suitably shaped rotary mixing blades, moved by a motor, with delicate mixing action. In the muller the cellular membranes of the olives are broken (mechanically and enzymatically), giving oil, water and other components (for example, polyphenolic). A single-screw pump transfers the ground paste to a horizontal centrifuge, known as decanter, from which the extraction of the oily must and the elimination of the olive residues takes place. Lastly, the oily must is sent towards a vertical centrifuge for the separation of the oil from the water.

The use of a plant positioned on the surface of a trailer, as described in EP-A-1570755 to the same applicant, in order to limit bulk, keeping the high production capacities typical of fixed plants, has undeniable advantages.

The number of devices to be actuated, their different orientation and arrangement, and the respective motorisation requirements have until now only made it possible to have plants with exclusively electric actuation.

This makes it impossible to use mobile plants at locations where there is insufficient availability of electrical energy.

Therefore, there is a great need to have a plant for the extraction of the liquid component from drupes mounted on the surface of a means pulled by a motor vehicle, which is able to work correctly taking the motion from the motor of the hauling means, and distributing it mechanically to at least a part of the devices arranged on the surface.

The purpose of the present invention is to provide a plant for the extraction of the liquid component from drupes mounted on a surface equipped with an axle provided with wheels having structural and functional characteristics such as to satisfy the aforementioned requirements and at the same time to avoid the aforementioned drawbacks with reference to the prior art.

Such a purpose is accomplished through a plant for the extraction of the liquid component from drupes in accordance with claim 1.

The dependent claims outline preferred and particularly advantageous embodiments of the plant according to the invention.

Further characteristics and advantages of the invention shall become clear from reading the following description provided as an example and not for limiting purposes, with the help of the figures illustrated in the attached tables, in which:
- figure 1 shows a schematic side view of a plant according to the present invention;
- figure 2 shows a plan view of the plant of figure 1;

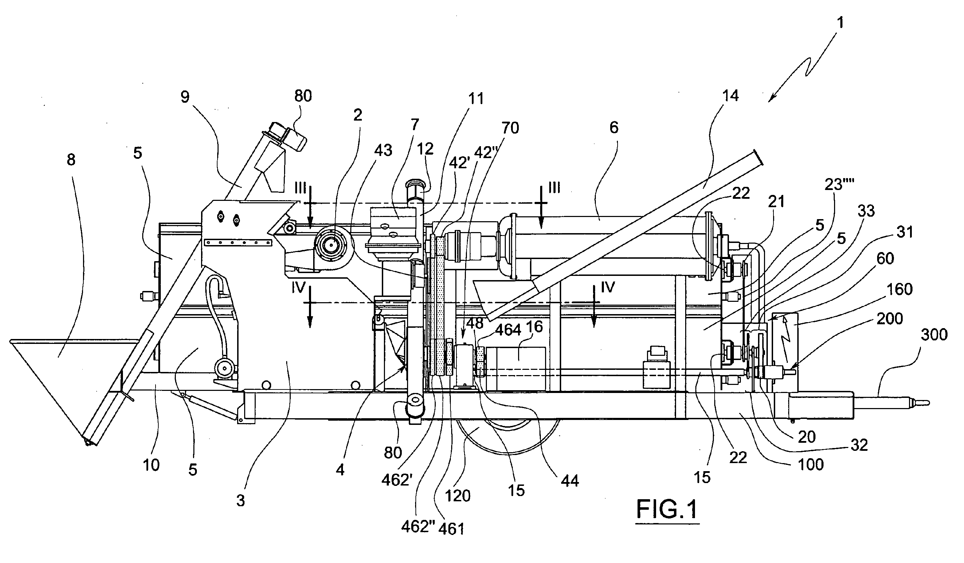

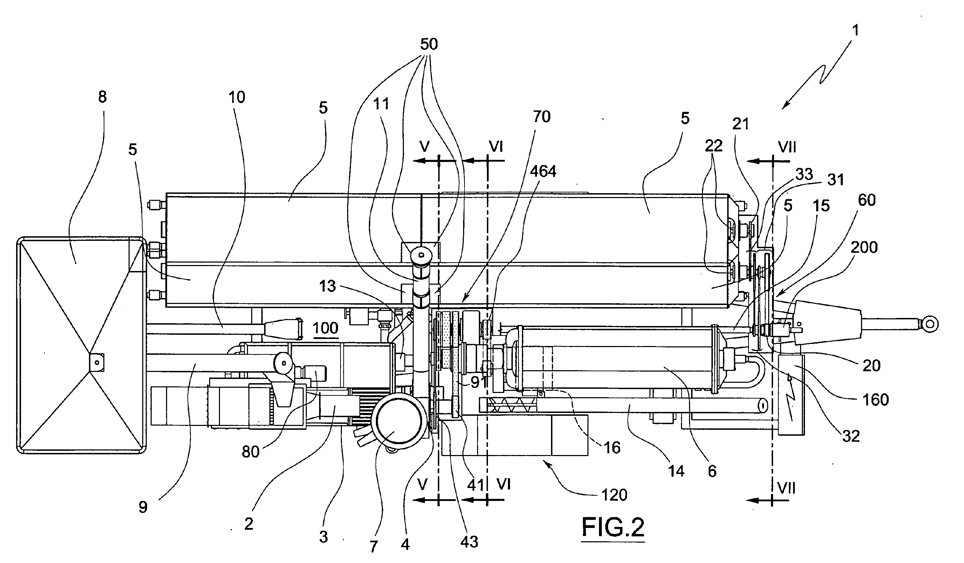

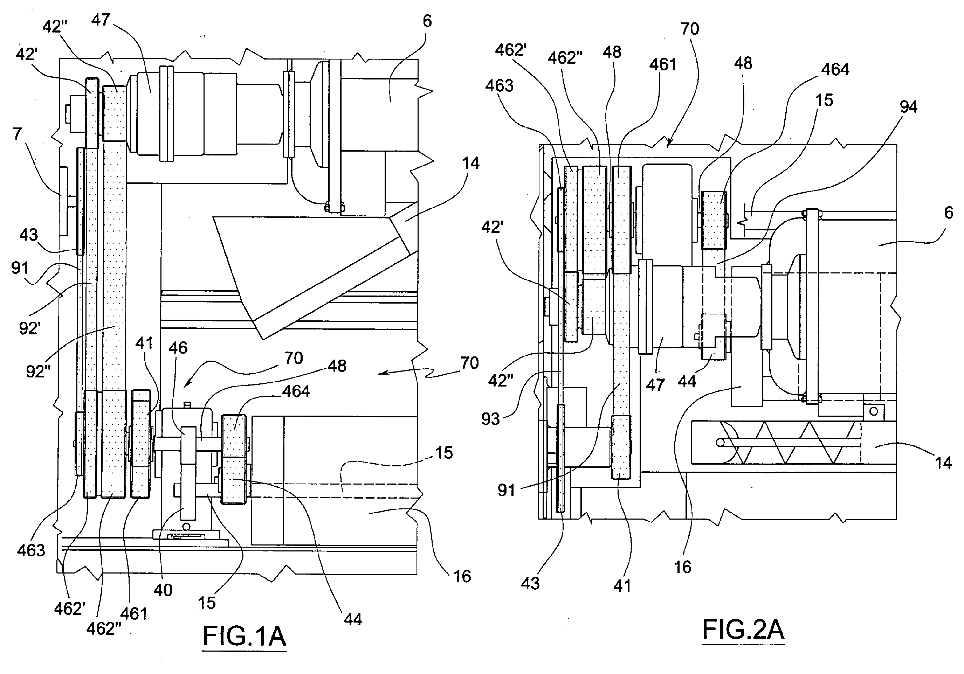

- figures 1A and 1B show enlarged views of two portions of figure 1;
- figures 2A and 2B show enlarged views of two portions of figure 2;

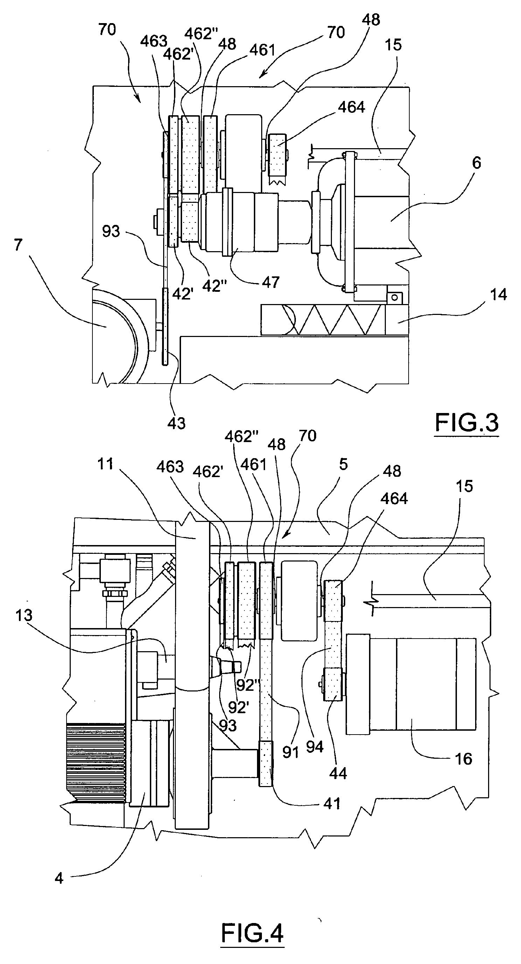

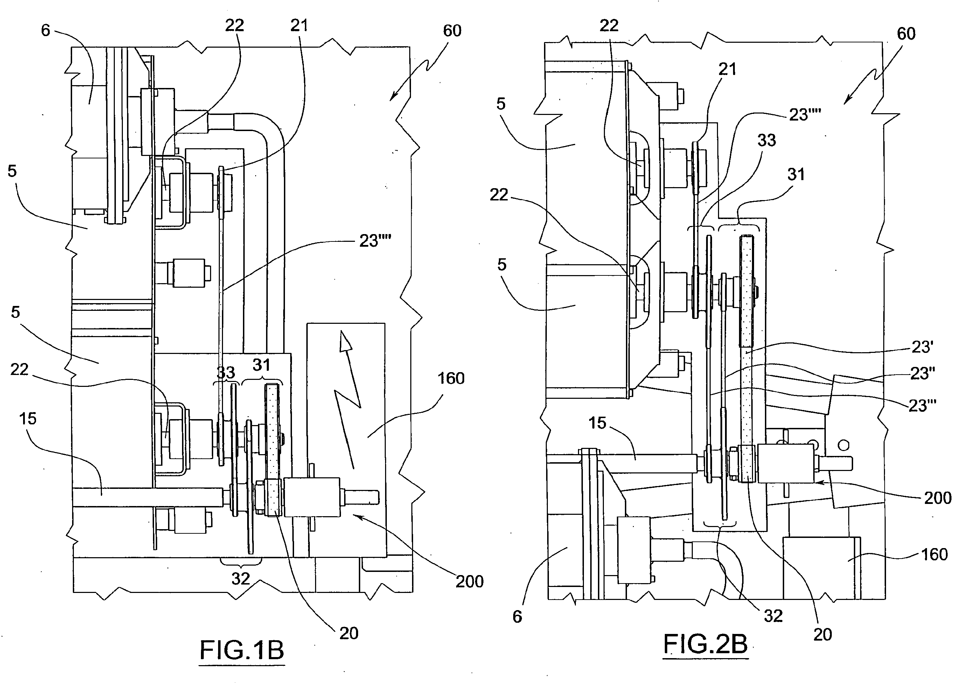

- figures 3 and 4 show schematic views respectively taken from the section lines III-III and IV-IV of figure 1;

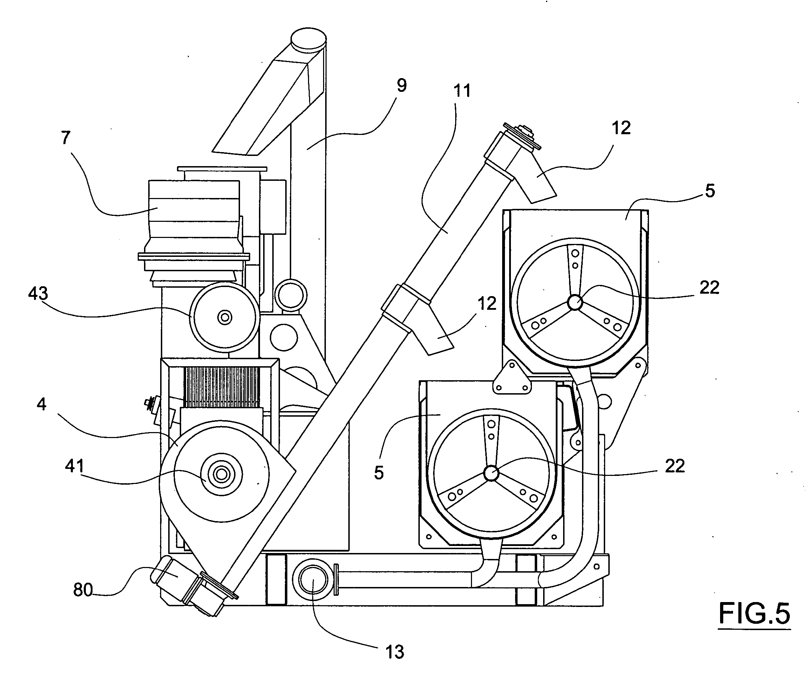

- figures 5, 6 and 7 show schematic views respectively taken from the section lines V-V, VI-VI and VII-VII of figure 2.

With reference to figures 1 and 2, a plant for the extraction of the liquid component from drupes mounted on a surface 100 equipped with an axle provided with wheels 120, in accordance with the present invention, is globally indicated with 1.

The surface 100 is suitable for being hauled, during transportation, through suitable hooking means 300, by a vehicle, usually a tractor with tyred wheels, not illustrated here.

Extremely briefly, the plant 1 for the production of olive oil arranged on the surface 100 comprises, in order and arranged in series, a defoliator 2, a washer 3, a cylinder oil mill 4, two pairs of mullers 5, a decanter 6 and a centrifugal separator 7 (simply called centrifuge), as schematised in figures 1 and 2.

Operatively, the olives, after having been collected and cleaned from the rough branches, are fed into a delivery hopper 8 rested directly on the ground, from which extends an Archimedean screw 9 that feeds the washer 3.

Preferably, the hopper 8 with the Archimedean screw 9 are integrally mobile between a use position, visible in figure 1, and a transportation position, not illustrated. The passage from one position to the other is made possible through a rigid arm 10 welded at one end to the Archimedean screw-hopper group and hinged at the other end to the surface 100. In this way, the hopper 8 with the Archimedean screw 9 are arranged completely raised from the ground during transportation, substantially reducing the projection from the back of the surface 100. The defoliated olives arrive in the washer 3 where they undergo a delicate washing, generally with water at room temperature. After washing in the washer 3, the washed olives are transferred to the cylinder oil mill 4 that crushes them to obtain a paste. Such a paste is sent, through a suitable Archimedean screw 11, into the mullers 5.

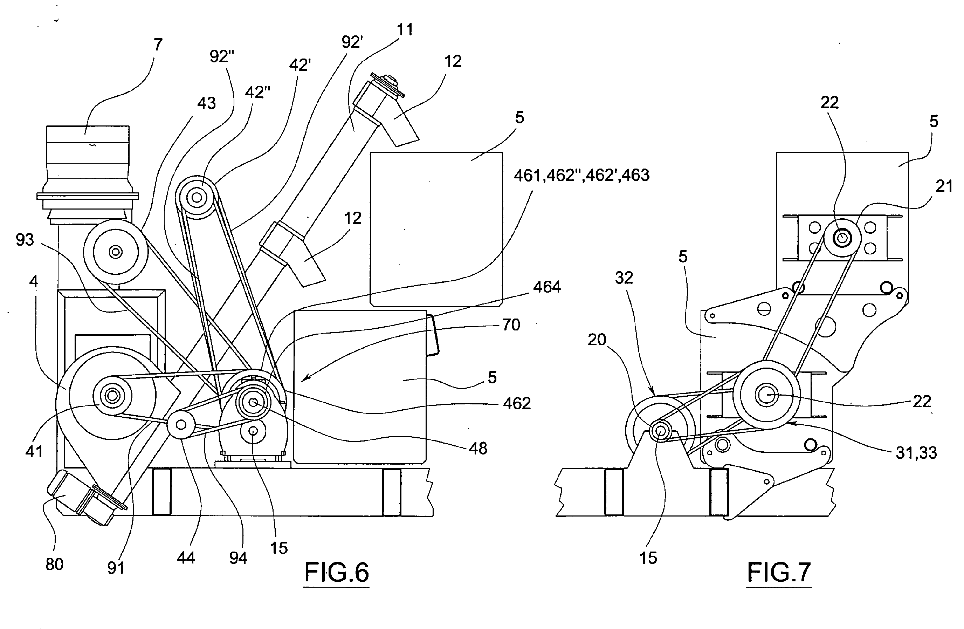

In the illustrated example, the Archimedean screw 11 is provided with two pouring bodies 12, each of which is suitable for feeding one muller 5 at a time (Figs.5,6).

According to the illustrated example of the present invention, the mullers 5 are four in number, in sets of two arranged coaxially. A first pair of coaxial mullers 5 is arranged near to one of the two longitudinal edges of the surface 100 and the remaining pair of coaxial mullers is arranged above the first pair, parallel to it, only partially covering its surface. Basically, the two pairs of mullers 5 are arranged with a step (Figs.5-7). By virtue of such an arrangement the overall space occupied by the four mullers 5 is less than an arrangement on a single plane.

The feeding of the mullers 5 with the olive paste is carried out through the pouring bodies 12 of the Archimedean screw 11 that are made so that they can rotate. Regarding this, in order to make it easier to feed each muller 5 individually through the simple rotation of the pouring bodies 12, each pair of mullers 5 has the respective inlet openings 50 for the olive paste arranged adjacent (Fig.2).

Basically, by rotating the pouring body 12 situated highest up, looking at figures 5,6, one of the two top mullers 5 is fed, whereas by rotating the pouring body 12 situated lowest down, one of the two bottom mullers 5 is fed. By blocking the passage of one of the two pouring bodies 12 it is possible to work with just one or two mullers 5; for example, when there are small amounts of olive paste compared to the capacity of the plant 1.

Each pair of coaxial mullers 5 has a common rotary shaft 22, which carries the kneading blades inside the two mullers 5 themselves.

From the mullers 5, the ground paste is fed, through a pump 13 (Fig.5), generally single-screw with variable speed, to the decanter 6, in which the extraction of the oily must and the elimination of the olive residues takes place through an Archimedean screw 14. The oily must obtained with the decanter 6 is pumped to the centrifuge 7 where the separation of the oil from the water takes place.

In accordance with the present invention, the energy necessary for the operation of all of the components of the plant 1 is taken from the engine of the tractor itself through a power take off, globally indicated with 200.

In practice, the engine of the tractor used to transport the plant 1 on the surface 100 provides the power required by the components of the plant 1 to work.

In particular, the rear power take off of the tractor, not illustrated, is kinematically connected with a motion transmission system suitable for making the plant 1 work. The motion transmission system comprises a transmission shaft 15, connected to the power take off of the tractor through a cardan joint. Such a transmission shaft 15 extends longitudinally on the surface 100 and actuates the shafts 22 of the mullers 5 through a speed reducer group 60, and the rotary elements respectively of the cylinder oil mill 4, of the decanter 6, of the centrifugal separator 7 and of the generator set 16 through a speed multiplier group 70.

In the illustrated example (Fig.2B), the reducer group 60 is in the form of a pulley 20, fitted onto the transmission shaft 15 near to the front edge of the surface 100, which transmits the motion, by means of a first belt 23', to the largest pulley of a first pair 31 of pulleys of different diameter and having a common hub, mounted idle on the shaft 22 of the lower muller 5. The first pair 31 of idle pulleys transmits the motion, from the smallest pulley and by means of a second belt 23", to the largest pulley of a second pair 32 of pulleys of different diameter and having a common hub, mounted idle on the transmission shaft 15. The second pair 32 of idle pulleys transmits the motion, from the smallest pulley and by means of a third belt 23''', to the largest pulley of a third pair 33 of pulleys of different diameter and having a common hub, fitted on the shaft 22 of the lower muller 5 and therefore, this third pair makes the shaft 22 itself of the lower muller rotate. The third pair 33 of fitted pulleys transmits the motion, from the smallest pulley and by means of a fourth belt 23'''', to a pulley 21 fitted on the shaft 22 of the upper muller 5, and therefore the latter makes the shaft 22 of the upper muller rotate.

In order to obtain the same rotation speed of the two shafts 22 of the mullers 5, the diameter of the pulley 21 is equal to the diameter of the smallest pulley of the third pair of pulleys 33 fitted on the shaft 22 of the lower muller 5.

The multiplier group 70 is in the form of a gear wheel 40 (for the sake of simplicity illustrated just in Fig.1A) fitted on the end of the transmission shaft 15 that reaches near to the centre of the surface 100. Said gear wheel 40 engages a further gear wheel 46 (Fig.1A) of smaller diameter, which is fitted onto a driven shaft 48 that is parallel and arranged slightly higher than the transmission shaft 15, as can clearly be seen in Fig.1A. On the driven shaft 48 a plurality of pulleys are fitted, indicated with 461,462',462",463 and 464, which transmit the motion of the driven shaft 48, by means of respective belts 91, 92', 92'', 93, 94, to as many pulleys, indicated with 41, 42', 42'', 43, 44, fitted on the rotary means respectively of the cylinder oil mill 4, of the decanter 6, of the centrifuge 7, as well as of a generator set 16 (Fig.1A), which is controlled by an appliance panel 160 and feeds the motors of the washer 3, of the defoliator 2, the pump 13 and the geared motors 80 necessary for the operation of the Archimedean screws 9,11,14.

In particular, the pulley 461 transmits the motion by means of the belt 91 to the pulley 41, which is fitted on the shaft of the cylinder oil mill 4 (Fig.4). The pulley 464 transmits the motion by means of the belt 94 to the pulley 44, which is fitted on the shaft of the generator set 16 (Fig.4). The pulley 463 transmits the motion to the pulley 43 by means of the belt 93 that rotates the shaft of the centrifuge 7 (Fig.3). In this last case, since the rotations of all of the pulleys take place along substantially horizontal axes, the transmission of motion to the centrifuge 7, which has a vertical axis, takes place by means of a conical pair, not illustrated.

Moreover, since as known, the decanter 6 has two members rotating at different speeds, respectively an inner helicoid, with low rotation speed, and a surrounding drum, with high rotation speed, the two pulleys 462',462" transmit the motion respectively to the pulleys 42',42" by means of the two belts 92',92'' (Fig.1A). The two pulleys 42' and 42'' are fitted onto shafts that respectively actuate the helicoid and the drum. In addition, an epicycloidal reducer 47 is used that allows the rotation speed of the helicoids inside the decanter 6 to be further reduced.

The diameters of each pulley are selected according to the rotation speed of the rotary members of the various components of the plant.

As can be appreciated from that which has been described above, the plant according to the present invention allows the requirements to be satisfied and the drawbacks mentioned in the introductory part of the present description with reference to the prior art to be overcome.

Indeed, the plant according to the present invention, as well as being able to easily access any location where olives are processed, can also be managed totally autonomously, without requiring the presence on site of energy sources for its operation, which is ensured by the same tractor used to transport the plant on site.

Moreover, the exploitation of the engine of the tractor as energy source for the operation of the plant is made easier by a particularly efficient and compact motion transmission system.

Of course, a man skilled in the art can bring numerous modifications and variants to the plant described above in order to satisfy contingent and specific requirements, all of which are covered by the scope of protection of the invention, as defined by the following claims.

## Claims

1. Plant (1) for the extraction of the liquid component from drupes mounted on a surface (100) equipped with an axle provided with wheels (120), said plant (1) comprising a cylinder oil mill (4) suitable for crushing the drupes to obtain a paste from it; at least one muller (5) for the homogenisation of the paste coming from the cylinder oil mill (4); a decanter (6) for the extraction of the must from the homogenised paste coming from the muller (5); a centrifugal separator (7) for the extraction of the liquid component from the must, **characterised in that** said plant (1) comprises mechanical motion transmission means connected to a transmission shaft (15) that extends longitudinally on the surface (100) and is connected to the rear power take off of the tractor, said shaft (15) being connected through a speed reducer (60) to the shaft of said at least one muller (5), and through a speed multiplier (70) to the rotary elements of the cylinder oil mill (4), of the decanter (6), of the centrifugal separator (7), and of a generator set (16).

2. Plant (1) according to claim 1, in which the generator set (16) feeds the electric actuation motors of all of the service devices of the plant, like Archimedean screws (9,11,14), transporters, etc.

3. Plant (1) according to claim 1, in which said speed reducer (60) comprises a pulley (20), fitted on the transmission shaft (15), which transmits the motion, by means of a first belt (23'), to the largest pulley of a first pair (31) of pulleys of different diameter and having a common hub, mounted idle on the shaft (22) of the at least one muller (5); said first pair (31) of idle pulleys being suitable for transmitting the motion, from the smallest pulley and by means of a second belt (23''), to the largest pulley of a second pair (32) of pulleys of different diameter and having a common hub, mounted idle on the transmission shaft (15); said second pair (32) of idle pulleys being suitable for transmitting the motion, from the smallest pulley and by means of a third belt (23'''), to the largest pulley of a third pair (33) of pulleys of different diameter and having a common hub, fitted on the shaft (22) of the at least one muller (5), making it rotate.

4. Plant (1) according to claim 1, in which said speed multiplier (70) comprises a first gear wheel (40), fitted on the transmission shaft (15), which engages a second gear wheel (46) of smaller diameter, said second gear wheel (48) being fitted on a driven shaft (48) parallel to the transmission shaft (15), on said driven shaft (48) a first series of pulleys (461,462',462'',463,464) being fitted suitable for transmitting the motion, by means of respective belts (91, 92', 92'', 93, 94) to a second series of pulleys (41,42',42'',43,44) respectively fitted on the rotary means of the cylinder oil mill (4), of the decanter (6), of the centrifuge (7) and of the generator set (16).

5. Plant (1) according to claim 1, comprising two pairs of mullers (5), in sets of two arranged coaxially and with a step, each muller (5) being suitable for being fed individually through a common Archimedean screw (11).

6. Plant (1) according to claim 5, in which said Archimedean screw (11) comprises a pair of pouring orientable bodies (12), each pouring body (12) being suitable for alternatively feeding two mullers (12) arranged coaxially.

7. Plant (1) according to claim 6, in which said pouring bodies (12) are rotatable with respect to a common rotation axis arranged coaxially to the axis of the Archimedean screw (11) itself.
